# EUROPÄISCHE PATENTANMELDUNG

(11) **EP 4 279 284 A1**
(43) Veröffentlichungstag der Anmeldung: **22.11.2023**
(21) Anmeldenummer: 22173739.8
(22) Anmeldetag: 17.05.2022
(51) Int. Cl.: B41M 5/00, C09D 11/322, C09D 11/40, B44C 5/04

(54) **VERFAHREN UND VORRICHTUNG ZUM BEDRUCKEN EINES PAPIERS**

(71) Anmelder: SWISS KRONO Tec AG, 6004 Luzern (CH)
(72) Erfinder: Oldorff, Frank, 19057 Schwerin (DE); Dicke, Sebastian, 16868 Bantikow (DE)
(74) Vertreter: Gramm, Lins & Partner Patent- und Rechtsanwälte PartGmbB

(57) **Zusammenfassung**

Die Erfindung betrifft ein Verfahren zum Bedrucken eines Papiers mittels einer Digitaldruckanlage, wobei die Digitaldruckanlage eine Singlepass-Digitaldruckanlage mit mehreren Farbauftragswerken zum Aufbringen von Drucktinten unterschiedlicher Farben ist, wobei wenigstens vier unterschiedliche Farben verwendet werden, die die Farben gelb, rot, blau und schwarz beinhalten, wobei die Drucktinten einen Wasseranteil zwischen 55 % und 65 % aufweisen und in einer Menge von höchstens 7,5 g/m2 aufgetragen werden.

## Beschreibung

Die Erfindung betrifft ein Verfahren zum Bedrucken eines Papiers mittels einer Digitaldruckanlage, wobei die Digitaldruckanlage eine Singlepass-Digitaldruckanlage mit mehreren Farbauftragswerken zum Aufbringen von Drucktinte unterschiedlicher Farben ist. Die Erfindung betrifft zudem eine Vorrichtung zum Durchführen eines derartigen Verfahrens.

Das Bedrucken von Papieren ist seit vielen Jahren aus dem Stand der Technik bekannt. Bedruckte Papiere werden für unterschiedliche Zwecke verwendet. In Form von Dekorpapieren, also Papieren, die mit einem Dekor bedruckt wurden, sind sie beispielsweise zur Herstellung von Laminatpaneelen, beispielsweise zur Herstellung von Fußbodenpaneelen oder Wand- und Deckenverkleidungen, aber auch bei der Herstellung von Möbelplatten verwendbar. Dabei wird das gewünschte Dekor, beispielsweise ein Echtholz-Dekor, auf eine Papierbahn oder ein Papierblatt aufgedruckt. Dieses wird dann beispielsweise mit einem Kern, vorzugsweise eine Holzwerkstoffplatte, verpresst.

Digitaldruckanlagen, mit denen Papiere bedruckt werden können, sind ebenfalls seit langer Zeit bekannt. Singlepass-Digitaldruckanlagen, bei denen das zu bedruckende Papier die Druckanlage nur einmal durchlaufen muss, werden beispielsweise in der Verpackungsindustrie verwendet, um Verpackungsmaterialien, beispielsweise Kartons, zu bedrucken. Die Anforderungen an den Druck und die Qualität des zu erzeugten Dekors sind in diesem Fall jedoch deutlich geringer als bei der Herstellung der oben genannten Dekorpapiere beispielsweise für die oben genannten Zwecke. Dies gilt sowohl für die Qualität des einzelnen Drucks des Dekors als auch für die Reproduzierbarkeit der Dekore, die oft in großer Anzahl hergestellt werden müssen. Hinzu kommt, dass Dekorpapiere mit dem gleichen Dekor oft in großem zeitlichem Abstand in unterschiedlichen Chargen hergestellt werden, wodurch an die Reproduzierbarkeit nochmals erhöhte Anforderungen gestellt werden.

Es ist bekannt, dass unterschiedliche Parameter die Qualität des hergestellten Dekors beeinflussen. Dies betrifft beispielsweise das verwendete Papier, die Menge und Art der aufgetragenen Drucktinte, die Menge und Art der darin verwendeten Pigmente, die Menge und Art eines gegebenenfalls verwendeten Primers, der auch als Grundierung bezeichnet wird, aber auch Umwelteinflüsse wie die Luftfeuchtigkeit und die Temperatur des Raumes oder der Werkshalle, in der der Druckvorgang stattfindet. Diese Parameter, die in der Regel nicht unabhängig voneinander optimiert werden können, sondern sich gegenseitig beeinflussen, haben jedoch nicht nur einen Einfluss auf das zu bedruckende Papier, sondern auch auf die zum Druck verwendete Digitaldruckanlage.

Bei der Auswahl der verwendeten Tinte und der darin enthaltenen Pigmente muss darauf geachtet werden, dass die gesamte Dekorvielfalt, die hergestellt werden soll, mit dem Farbpigmentsatz abgebildet werden kann. Daher ist ein möglichst umfangreicher Farbpigmentsatz mit möglichst vielen unterschiedlichen Farben scheinbar von Vorteil. Andererseits werden dadurch die Kosten erhöht und die Digitaldruckanlage konstruktiv aufwendig, dafür jede der unterschiedlichen Farben ein eigenes Farbauftragswerk vorhanden sein muss.

Der Erfindung liegt daher die Aufgabe zugrunde, ein Verfahren zum Bedrucken des Papiers so zu verbessern, dass ein qualitativ hochwertiges Dekor erzeugt werden kann, das besonders bevorzugt reproduzierbar ist.

In einer Ausgestaltung der vorliegenden Erfindung werden wenigstens vier unterschiedliche Farben verwendet. Alternativ oder zusätzlich dazu weisen die verwendeten Drucktinten einen Wasseranteil zwischen 55 % und 65 % auf. Alternativ oder zusätzlich dazu werden die Drucktinten in einer Menge von höchstens 7,5 g/m² aufgetragen. Jedes dieser Merkmale und jede Kombination dieser Merkmale bildet in Kombination mit einem Verfahren zum Bedrucken eines Papiers mittels einer Digitaldruckanlage, wobei die Digitaldruckanlage eines Singlepass-Digitaldruckanlage mit mehreren Farbauftragswerken zum Aufbringen von Drucktinten unterschiedlicher Farben ist, eine eigenständige Erfindung.

Vorzugsweise beinhalten die wenigstens vier Farben die Farben gelb, rot, blau und schwarz. Diese Farben werden bevorzugt auch dann verwendet, wenn genau vier unterschiedliche Farben verwendet werden. In anderen Ausgestaltungen wird statt blau die Farbe cyan verwendet. Vorzugsweise wird für die gelbe Farbe das Pigment PY150, optional in Kombination mit PY181 verwendet. Vorzugsweise wird für die rote Farbe das Pigment PR254 optional in Kombination mit PY181 und/oder PR207 verwendet. Vorzugsweise wird als Pigment für die blaue Farbe PC15:3 und/oder PC 15:4 verwendet. Vorzugsweise wird als Pigment für die schwarze Farbe PBI 7 und/oder Carbon Black verwendet. In einigen Ausgestaltungen wird eine fünfte Farbe verwendet. Vorzugsweise handelt sich dabei um die Farbe Orange. Für diese Farbe wird bevorzugt das Pigment PY181 verwendet. Alternativ dazu wird eine Kombination der Pigmente PY181 und PR207 verwendet.

Vorzugsweise werden vier Farben verwendet, wenn das zu bedruckende Papier sehr hell ist, beispielsweise ein weißes Papier bedruckt wird. Dieses hat vorzugsweise einen L-Wert von mindestens 92, wobei L die Helligkeit einer Farbe mit Werten zwischen 0 und 100 im sogenannten Lab-Farbraum, der dem Fachmann bekannt ist, beschreibt. Die Verwendung einer fünften Farbe ist beispielsweise dann sinnvoll, wenn das zu bedruckende Papier einen geringeren L-Wert, also eine geringere Helligkeit aufweist.

Vorzugsweise weisen die verwendeten Drucktinten einen Lösemittelanteil von wenigstens 27 %, vorzugsweise wenigstens 30 % auf. Vorzugsweise weisen die Drucktinten einen Lösemittelanteil von höchstens 37 %, besonders vorzugsweise von höchstens 32 % auf. Weiter bevorzugt beträgt der Lösemittelanteil der Drucktinten 32 %. Vorzugsweise weisen die verwendeten Drucktinten einen Wasseranteil von wenigstens 57 % auf. Vorzugsweise beträgt der Wasseranteil der verwendeten Drucktinten höchstens 62 %. Besonders bevorzugt beträgt der Wasseranteil der verwendeten Drucktinten 60 %.

In einer vorteilhaften Ausgestaltung beinhalten die verwendeten Drucktinten einen Pigmentanteil von wenigstens 0,5 % und höchstens 1,5 %. Besonders bevorzugt beträgt der Pigmentanteil 1 %. Bei einem größeren Pigmentanteil steigt gleichzeitig auch der Feststoffanteil, da die Pigmente in der Regel als Feststoffe vorliegen. Soll das bedruckte Papier durchimprägniert werden, ist ein zu hoher Feststoffanteil von Nachteil.

Vorzugsweise wird vor dem Aufbringen der Drucktinten einen Primer als Grundierung auf das zu bedruckende Papier aufgetragen. Vorzugsweise handelt es sich um einen aktiven Primer. Diese halten die in der Drucktinte enthaltenen Pigmente nach dem Aufdrucken auf das Papier in einer möglichst dünnen Schicht an der Oberseite des bedruckten Papieres fest und verhindern so, dass die Pigmente weit in das Papier absacken. Dadurch wird auch bei relativ geringer Auftragsmenge der Drucktinte ein intensiver frischer Farbeindruck erreicht. Durch einen aktiven Primer lässt sich die verwendete Tintenmenge reduzieren, wodurch auch die Produktionskosten reduziert werden. Der Primer wird in der Regel verwendet, um das zu bedruckende Papier zu imprägnieren und so zu verhindern, dass aufgedruckte Drucktinten und insbesondere die darin enthaltenen Pigmente tief in das zu bedruckende Papier absacken und eindringen. Je tiefer die Pigmente in das Papier eindringen, desto schwächer ist der Farbeindruck, den die Drucktinte hinterlässt. Dies kann durch einen erhöhten Tintenverbrauch, also eine größere Auftragsmenge der Drucktinte ausgeglichen werden, wodurch jedoch die Produktionskosten erhöht werden. Hinzukommt, dass dadurch auch die in der Digitaldruckanlage verwendete Flüssigkeitsmenge steigt, was zu weiteren Nachteilen führen kann.

Vorzugsweise wird der Primer in einer Menge von mindestens 4 g/m², bevorzugt mindestens 4,5 g/m² aufgetragen. Wird eine geringere Menge verwendet, kann dies dazu führen, dass das zu bedruckende Papier nicht ausreichend imprägniert wird. Vorzugsweise wird der Primer in einer Menge von höchstens 6 g/m², bevorzugt höchstens 5,5 g/m² aufgetragen. Besonders bevorzugt beträgt die Auftragsmenge des Primers 5 g/m².

Alternativ kann auch ein nicht aktiver Primer verwendet werden, der beispielswiese in einer Menge von 8 g/m² bis 20 g/m² aufgetragen wird. Dadurch erhöhen sich allerdings der Materialeinsatz und die Herstellungskosten.

Vorzugsweise verfügt die Digitaldruckanlage über ein Primerauftragswerk, mittels dessen der Primer auf das Papier aufgebracht wird. Vorzugsweise befindet sich das Primerauftragswerk vor den Farbauftragswerken, sodass das Papier beim Durchlaufen der Digitaldruckanlage zunächst am Primerauftragswerk vorbeigeführt und dort mit dem Primer bedruckt wird, bevor es an den Farbauftragswerken vorbeigeführt wird, wo es mit der jeweiligen Drucktinte bedruckt wird. In einer bevorzugten Ausgestaltung befindet sich zwischen dem Primerauftragswerk und den Farbauftragswerken wenigstens ein Trockner, durch den der aufgebrachte Primer getrocknet wird. Vorzugsweise wird der Primer und das damit bedruckte Papier auf einen vorbestimmten Feuchtigkeitswert getrocknet.

Vorzugsweise verfügt das Primerauftragswerk über ein Druckkammerrakel und eine Keramikwalze, die vorzugsweise eine indirekte Auftragsgummiwalze aufweist. Besonders bevorzugt verfügt das Primerauftragswerk über eine Keramikrasterwalze mit 80er Raster. Durch die Verwendung einer Keramik-Walze werden hohe Standzeiten erreicht.

Vorzugsweise sind die Farbauftragswerke eingerichtet und geeignet, das Papier auf einer Breite von wenigstens 2050 mm zu bedrucken. Vorzugsweise wird das Papier mit einer Geschwindigkeit von wenigstens 135 m/min an den Farbauftragswerken vorbeigeführt. Besonders bevorzugt wird das Papier mit einer Geschwindigkeit von wenigstens 270 m/min an den Farbauftragswerken vorbeigeführt. Für die Qualität des hergestellten und gedruckten Dekores ist eine möglichst hohe Auflösung von Vorteil. Vorzugsweise verfügt daher wenigstens eines der Farbauftragswerke, besonders bevorzugt jedoch alle Farbauftragswerke über wenigstens zwei Druckkopfreihen. Diese sind in Bewegungsrichtung des Papieres hintereinander angeordnet. Vorzugsweise wird das Papier mit einer Auflösung von wenigstens 1200 dpi (dot per inch "Punkte pro Zoll) in Bewegungsrichtung des Papiers, also in Längsrichtung, bei einer Geschwindigkeit des Papiers von 135 m/min bedruckt. Bei einer Geschwindigkeit von 270 m/min wird das Papier vorzugsweise mit einer Auflösung von wenigstens 600 dpi in Bewegungsrichtung des Papiers, also in Längsrichtung, bedruckt. Besonders bevorzugt wird das Papier mit einer Auflösung von wenigstens 1200 dpi in Querrichtung, also senkrecht zur Bewegungsrichtung des Papiers, bedruckt. Bevorzugt ist diese Auflösung unabhängig von der Vorschubgeschwindigkeit, mit der das Papier innerhalb der Digitaldruckanlage bewegt wird.

Vorzugsweise hängt die "Waveform", mit der die Form der am Druckkopf gebildeten Tintentropfen beeinflusst wird, von der Wahl der verwendeten Tinten und den verwendeten Druckköpfen ab.

In einer bevorzugten Ausgestaltung verfügt die Digitaldruckanlage über einen automatischen Papierrollenwechsler. Insbesondere wenn das zu bedruckende Papier in Form einer Papierbahn auf einer Rolle zugeführt wird, stellt das Ende der Rolle eine Herausforderung für den Druckprozess dar. Ohne automatischen Papier Rollenwechsel ist es meist unvermeidbar, die Digitaldruckanlage zu stoppen, wenn die Papierbahn sich dem Ende zuneigt. Oftmals werden die letzten Meter nicht mehr zum Herstellen von Dekorpapieren verwendet, sondern dienen zum Anschließen der nächsten Papierbahn, um einen möglichst nahtlosen Übergang von einer Papierbahn auf die nächste Papierbahn zu gewährleisten. Auch die ersten Meter der neuen Papierbahn werden dann oftmals nicht zum Drucken von Dekorpapieren verwendet. Mit einem automatischen Papierrollenwechsler lässt sich dies vermeiden und die Digitaldruckanlage kann ohne Pause auch beim Wechsel der Papierrolle produzieren.

Vorzugsweise verfügt die Digitaldruckanlage über eine automatische Papiereinfädelung, sodass eine Papierbahn einer neuen Papierrolle leicht eingefädelt werden kann. Dies ist ebenso wieder Papierrollenwechsler nicht nur dann von Vorteil, wenn eine Papierbahn einer Papierrolle zu Ende geht, sondern auch dann, wenn aufgrund anderer Gründe beispielsweise eine Papierrolle zu wechseln ist.

Vorteilhafterweise wird das bedruckte Papier nach dem Bedrucken einer Kontrolleinrichtung zugeführt. Besonders bevorzugt durchläuft es diese Kontrolleinrichtung. In der Kontrolleinrichtung werden Daten des Papiers mittels einer Erfassungseinheit erfasst. Diese Erfassungseinheit eine ist vorzugsweise ein Sensor, besonders bevorzugt ein optischer Sensor, beispielsweise eine Kamera, mit der das hergestellte Dekor oder Teile davon erfasst werden. Die Erfassungseinheit sendet dann Signale an eine elektrische Steuerung, die vorzugsweise Teil der Digitaldruckanlage ist. Die elektrische Steuerung, die vorzugsweise in Form einer elektronischen Datenverarbeitungseinrichtung mit einem Mikroprozessor ausgebildet ist, ist eingerichtet, Fehler zu erkennen. Dazu ist es von Vorteil, wenn die elektrische Steuerung auf einen elektronischen Datenspeicher zugreifen kann, in dem SollWerte abgelegt sind, mit denen die von der Erfassungseinheit erfassten Werte verglichen werden.

Vorzugsweise weist das Papier eine Grammatur von wenigstens 45 g/m² und höchsten 65 g/m² auf.

Die Erfindung löst die gestellte Aufgabe zudem durch eine Vorrichtung, insbesondere eine Digitaldruckanlage, zum Durchführen eines der hier beschriebenen Verfahren.

In einem konkreten Ausführungsbeispiel werden bei einem Hersteller für Laminatfußbodendielen auf einer Singlepass-Digitaldruckanlage bedruckte Dekorpapiere hergestellt. Diese werden mit Arbeitsbreite 2070mm bedruckt. Dabei wird beispielsweise eine "Fuji Samba" Druckkopfdoppelreihe verwendet, die eine Auflösung von 1200 dpi x 1200 dpi ermöglicht. Die Druckköpfe verfügen über einen Tintenumlauf, durch den erreicht wird, dass Tinte nicht zu lange vor dem Druckkopf ansteht, wenn die jeweilige Farbe für einen längeren Zeitraum nicht verwendet wird. Da die Tinte immer in Bewegung ist, werden Verstopfungen wirksam vermieden. Derartige Tintenumläufe sind bei allen hier beschriebenen Ausführungsformen vorteilhaft. Die Geschwindigkeit, mit der das Papier durch die Digitaldruckanlage geführt wird, beträgt beispielsweise 135m/min. Die Auflösung des Druckers beträgt dann 1200 dpi x1200 dpi oder bei einer Geschwindigkeit des Papiers von 270m/min 1200 dpi x 600 dpi. Im hier beschriebenen Ausführungsbeispiel wird nur eine Dekorpapiersorte mit einer Grammatur zwischen 50 g und 65 g verwendet. Das Tintensystem weist vier unterschiedliche Farben, gelb, rot, blau und schwarz (cyan, red, yellow, black; CRYK) auf, wobei wasserbasierte Tinten von der Firma Staedtler verwendet und mit einer durchschnittlichen Auftragsmenge von 4g/m2 aufgebracht werden.

Inline wird vor dem Aufbringen der Drucktinten ein "Aktiv Primer" aufgetragen, der von der Firma Staedtler hergestellt wird. Dieser wird mit einer Keramikrasterwalze in einer Auftragsmenge von 5g/m² aufgetragen. Die Luftfeuchtigkeit in der Halle, in der der Druck stattfindet, beträgt im beschriebenen Ausführungsbeispiel 55%, die Lufttemperatur beträgt 23°C.

Das Tintensystem lässt durch moderate Auftragsmengen eine konkurrenzfähige Kostensituation zu. Die vier eingesetzten Drucktinten beinhalten als Pigmente PY150 für gelb, PR254 für rot, PC15:3 für blau und PBI 7 für schwarz. Durch den Einsatz dieser Pigmentkombination können nahezu alle Kollektionsdekore farblich wunschgerecht umgesetzt werden. Die eingesetzten Materialien und deren Auftragsmengen lassen weiterhin eine gute Weiterverarbeitung, beispielsweise eine Imprägnierung oder Imprägnathaftung auf einer als Kern verwendeten Holzwerkstoffplatte, insbesondere einer HDF-Platte zu, wodurch eine hohe Qualität des Endproduktes entsteht mit weniger als 1% Ausschuss und Reklamationen. Die geringe Anzahl von nur vier Drucktinten ermöglicht einen geringen Einkaufspreis und weniger Stillstände durch weniger mögliche Fehlerquellen.

Aufgrund der hohen Dekorvielfalt, der geringen Verbräuche der Drucktinten und Primer, des geringen Ausschuss- und Reklamationsanteils und der günstig in großen Mengen gekauften Produktionsflüssigkeiten entsteht ein sehr konkurrenzfähiges Laminat, welches günstig am Markt angeboten werden kann.

## Patentansprüche

1. Verfahren zum Bedrucken eines Papiers mittels einer Digitaldruckanlage, wobei die Digitaldruckanlage eine Singlepass-Digitaldruckanlage mit mehreren Farbauftragswerken zum Aufbringen von Drucktinten unterschiedlicher Farben ist, **dadurch gekennzeichnet, dass** wenigstens vier unterschiedliche Farben verwendet werden, die die Farben gelb, rot, blau und schwarz beinhalten, wobei die Drucktinten einen Wasseranteil zwischen 55% und 65% aufweisen und in einer Menge von höchstens 7,5 g/m² aufgetragen werden.

2. Verfahren nach einem der vorstehenden Ansprüche, **dadurch gekennzeichnet, dass** die Drucktinten einen Lösemittelanteil zwischen 27 % bis 37 % aufweisen.

3. Verfahren nach einem der vorstehenden Ansprüche, **dadurch gekennzeichnet, dass** die Drucktinten einen Pigmentanteil von 0,5 % bis 1,5 %, vorzugswiese 1 % aufweisen.

4. Verfahren nach einem der vorstehenden Ansprüche, **dadurch gekennzeichnet dass** vor dem Aufbringen der Drucktinten ein Primer als Grundierung auf das Papier aufgetragen wird.

5. Verfahren nach Anspruch 4, **dadurch gekennzeichnet, dass** der Primer in einer Menge von wenigstens 4 g/m² und höchstens 6 g/m², bevorzugt in einer Menge von 5 g/m² aufgetragen wird.

6. Verfahren nach Anspruch 4 oder 5, **dadurch gekennzeichnet, dass** die Digitaldruckanlage ein Primerauftragswerk aufweist, mittels dessen der Primer auf das Papier aufgebracht wird.

7. Verfahren nach einem der vorstehenden Ansprüche, **dadurch gekennzeichnet, dass** die Farbauftragswerke eingerichtet und geeignet sind, das Papier auf einer Breite von wenigstens 2050 mm zu bedrucken.

8. Verfahren nach einem der vorstehenden Ansprüche, **dadurch gekennzeichnet, dass** wenigstens eines der Farbauftragswerke, vorzugsweise alle Farbauftragswerke wenigstens zwei Druckköpfe aufweisen

9. Verfahren nach einem der vorstehenden Ansprüche, **dadurch gekennzeichnet, dass** das Papier mit einer Geschwindigkeit von wenigstens 135 m/min, vorzugsweise von 270 m/min an den Farbauftragswerken vorbeigeführt wird.

10. Verfahren nach einem der vorstehenden Ansprüche, **dadurch gekennzeichnet, dass** die Drucktinten mit einer Auflösung von wenigstens 1200 dpi in der Druckbreite und einer Auflösung von wenigstens 600 dpi, vorzugsweise von wenigstens 1200 dpi in Drucklänge aufgebracht werden.

11. Verfahren nach einem der vorstehenden Ansprüche, **dadurch gekennzeichnet, dass** das die Digitaldruckanlage einen automatischen Papierrollenwechsel aufweist.

12. Verfahren nach einem der vorstehenden Ansprüche, **dadurch gekennzeichnet, dass** das bedruckte Papier nach dem Bedrucken eine Kontrolleinrichtung durchläuft, in der Daten des Papiers mittels einer Erfassungseinheit erfasst werden, die in einer elektrischen Steuerung verarbeitet werden, die eingerichtet ist, Fehler zu erkennen.

13. Verfahren nach einem der vorstehenden Ansprüche **dadurch gekennzeichnet, dass** das Papier eine Grammatur von wenigstens 45 g/m² und höchsten 65 g/m² aufweist.

14. Vorrichtung zum Durchführen eines Verfahrens nach einem der vorstehenden Ansprüche.
